# EUROPÄISCHE PATENTSCHRIFT

(11) **EP 2 956 314 B1**
(45) Veröffentlichungstag und Bekanntmachung des Hinweises auf die Patenterteilung: **28.09.2016**
(21) Anmeldenummer: 14701286.8
(22) Anmeldetag: 18.01.2014
(51) Int. Cl.: B60G 3/20, B60G 7/00, B60G 21/055

(54) **RADAUFHÄNGUNG FÜR EIN HINTERRAD EINES ZWEISPURIGEN KRAFTFAHRZEUGS**
WHEEL SUSPENSION FOR A REAR WHEEL OF A TWO-TRACK MOTOR VEHICLE
SUSPENSION DE ROUE POUR UNE ROUE ARRIÈRE D'UN VÉHICULE AUTOMOBILE À DEUX VOIES

(30) Priorität: 16.02.2013 DE 102013002705
(43) Veröffentlichungstag der Anmeldung: 23.12.2015
(73) Patentinhaber: Audi AG, 85045 Ingolstadt (DE)
(72) Erfinder: GOLDBERG, Ruben, 85049 Ingolstadt (DE); LANGHOFF, Hans-Jürgen, 85101 Lenting (DE); MOHRLOCK, Dominik, 85114 Buxheim (DE); ISLIKER, Marco, 85049 Ingolstadt (DE)
(74) Vertreter: Reichert, Thomas Klaus
(86) Internationale Anmeldenummer: PCT/EP2014/000134
(87) Internationale Veröffentlichungsnummer: WO 2014/124724

(56) Entgegenhaltungen:
- EP-A1- 1 741 577
- EP-A1- 2 423 009
- EP-A2- 1 364 816
- DE-A1- 3 509 145
- DE-A1- 3 826 930
- DE-A1- 4 408 571
- DE-A1- 10 005 407
- DE-A1-102010 030 292
- JP-A- 2008 168 891
- JP-A- 2009 029 257

## Beschreibung

Die Erfindung betrifft eine Radaufhängung für ein ungelenktes oder gelenktes Hinterrad eines zweispurigen Kraftfahrzeugs nach dem Patentanspruch 1.

Aus der DE 10 2010 030 292 A1 ist eine gattungsgemäße Radaufhängung für ein Hinterrad eines zweispurigen Kraftfahrzeuges bekannt. Die Radaufhängung weist einen Fünflenkerverband auf, der aus fünf Einzellenkern besteht.

Die Einzellenker sind über aufbauseitige Lager am Fahrzeugaufbau und über radträgerseitige Lager am Radträger des Hinterrads angelenkt. In der Fahrtrichtung betrachtet weist der Fünflenkerverband ein vorderes Lenkerpaar und ein hinteres Lenkerpaar auf. Das vordere Lenkerpaar weist einen mit Bezug auf die Hinterrad-Drehachse unteren vorderen Lenker und einen oberen vorderen Lenker auf. Das hintere Lenkerpaar weist einen unteren hinteren Lenker und einen oberen hinteren Lenker auf. In der Fahrzeuglängsrichtung ist zwischen den beiden Lenkerpaaren ein in einer unteren Lenkerebene befindlicher Sturzlenker angeordnet. Zudem ist ein Federbein unmittelbar am Radträger des Hinterrades angelenkt.

Die DE 100 05 407 A1, DE 38 26 930 A1, und EP 1 741 577 A1 offenbaren weitere relevante Radaufhängungen.

Die Aufgabe der Erfindung besteht darin, eine Radaufhängung für ein Hinterrad eines zweispurigen Kraftfahrzeuges bereitzustellen, bei der sich insbesondere unter dem Einfluss von auf die Hinterräder wirkenden Seitenkräften oder Längskräften ein vorteilhaftes Spur- oder Sturzverhalten einstellt.

Die Aufgabe ist durch die Merkmale des Patentanspruches 1 gelöst. Vorteilhafte Weiterbildungen der Erfindung sind in den Unteransprüchen offenbart.

Gemäß dem Patentanspruch 1 ist zwischen dem vorderen Lenkerpaar und dem hinteren Lenkerpaar in der Fahrzeuglängsrichtung betrachtet ein unterer Federlenker angeordnet, auf dem eine, einen Schwingungsdämpfer und eine Tragfeder aufweisende Federanordnung abgestützt ist. Das mit Bezug auf den Federlenker vordere Lenkerpaar ist in der Fahrzeugquerrichtung weicher als das hintere Lenkerpaar ausgebildet. Durch das im Vergleich zum hinteren Lenkerpaar querweichere vordere Lenkerpaar kann unter Ausübung einer Seitenkraft eine elastokinematisch vorteilhafte Vorspuränderung am Hinterrad erfolgen.

Zur weiteren Verbesserung des Spur- und Sturzverhaltens des Fahrzeugs unter dem Einfluss von auf die Hinterräder wirkenden Längs- und Seitenkräften kann der obere vordere Lenker des vorderen Lenkerpaars und der obere hintere Lenker des hinteren Lenkerpaars in der Draufsicht betrachtet in der Fahrzeugquerrichtung nach außen unter Bildung eines Öffnungswinkels zueinander keilförmig angeordnet sein. Gleiches trifft auch auf den unteren vorderen Lenker sowie den unteren hinteren Lenker (d.h. die Spurstange) zu, die in der Draufsicht betrachtet in der Fahrzeugquerrichtung nach außen unter Bildung eines weiteren Öffnungswinkels zueinander keilförmig angeordnet werden können.

Aufgrund der oben dargelegten Lenker-Pfeilung spannen die beiden oberen Lenker ein oberes Dreieck und die beiden unteren Lenker ein unteres Dreieck auf. Das obere Dreieck und das untere Dreieck können in der Draufsicht betrachtet unter Bildung eines gemeinsamen Schnittbereiches überlagert sein. Im Hinblick auf ein vorteilhaftes Spur- und Sturzverhalten hat es sich als besonders zweckmäßig erwiesen, dass der Federlenker zumindest teilweise, insbesondere im Wesentlichen vollständig im gemeinsamen Schnittbereich der beiden Dreiecke angeordnet ist.

Um bei Ausübung einer Seitenkraft oder einer Längskraft auf das Hinterrad eine vorteilhafte Vorspuränderung zu erreichen, ist es zudem von Vorteil, wenn in der Fahrzeuglängsrichtung betrachtet die Hinterrad-Drehachse zwischen dem vorderen Lenkerpaar und dem hinteren Lenkerpaar angeordnet sind.

In einer Ausführungsform können die Tragfeder und der Schwingungsdämpfer gemeinsam in einem Federbein integriert sein, das wiederum zwischen dem Fahrzeugaufbau und dem unteren Federlenker abgestützt ist. Demgegenüber können die Tragfeder und der Schwingungsdämpfer auch voneinander separat auf dem unteren Federlenker abgestützt werden. Die Anbindungsstelle des Federbeins beziehungsweise der voneinander separat angeordneten Tragfeder und des Schwingungsdämpfers ist daher mit Bezug auf die Raddrehachse unterhalb derselbigen angeordnet.

Durch die Abstützung auf dem unteren Federlenker sind die Tragfeder und der Schwingungsdämpfer in einer tiefen Einbaulage angeordnet. Dadurch ergeben sich Bauraumvorteile im Fahrzeugheckbereich.

Der untere Federlenker und der vordere untere Lenker können in gedachter Verlängerung in einem unteren Schnittpunkt zusammenlaufen. Der vordere obere Lenker und der hintere obere Lenker können ebenfalls in gedachter Verlängerung in einem oberen Schnittpunkt zusammenlaufen. Die beiden Schnittpunkte definieren eine Lenkachse, um die sich das Hinterrad bei einer Vorspuränderung dreht. Die Lenkachse kann mit Bezug auf einen Radaufstandspunkt (das heißt zwischen dem Fahrzeugrad und einer Fahrbahn) in der Fahrzeugquerrichtung um einen Querversatz nach außen angeordnet sein. Dadurch geht das Hinterrad bei Ausübung einer Längskraft (das heißt beim Bremsen oder im Rekuperierbetrieb) in Vorspur.

Allgemein gilt, dass beim Fahrzeugantrieb die Antriebskraft über die Gelenkwelle an der Radmitte des Hinterrads angreift. Beim Bremsvorgang greift dagegen die Bremskraft nicht an der Radmitte an, sondern am Radaufstandspunkt des Hinterrads. Dadurch ergeben sich beim Bremsen und beim Antrieb unterschiedliche Hebelwirkungen an der Hinterachse. Diese führen bei herkömmlichen Hinterachslenker-Geometrien zu jeweils umgekehrten kinematischen Verhalten. Demgegenüber wird durch die spezielle erfindungsgemäße Lenkergeometrie der Hinterachse ein im Wesentlichen gleiches kinematisches Verhalten sowohl beim Bremsen als auch beim Antrieb erzeugt.

Die Radaufhängung weist zudem einen in etwa U-förmigen Querstabilisator auf.

Der Stabilisator kann ein, in der Fahrzeugquerrichtung ausgerichtetes, drehbar gelagertes Mittelteil und vom Mittelteil in der Fahrzeuglängsrichtung abragende Abtriebsschenkel aufweisen. Die Abtriebsschenkel können direkt oder alternativ indirekt über eine in etwa vertikal verlaufende Stange mit einem der Lenker der Radaufhängung gelenkig verbunden sein. Bevorzugt kann der Abtriebsschenkel des Querstabilisators über die vertikal verlaufende Koppelstange mit dem oberen vorderen Lenker verbunden sein.

Beim vorderen Lenkerpaar ist der obere vordere Lenker gegenüber dem unteren vorderen Lenker um einen Längsversatz in der Fahrzeuglängsrichtung zurückgesetzt. Demgegenüber können beim hinteren Lenkerpaar der hintere obere Lenker und der hintere untere Lenker, das heißt die Spurstange, nicht hintereinander angeordnet sein, sondern sich in der Draufsicht betrachtet einander überkreuzen.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer Teilansicht von unten den Fünflenkerverband der Radaufhängung;

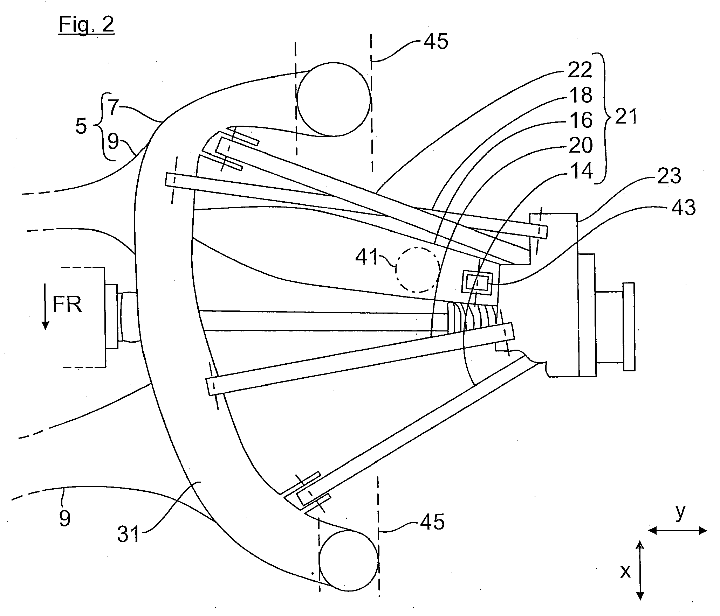

- Fig. 2: in einer Teilansicht von oben den Fünflenkerverband der Radaufhängung;
- Fig. 3: in einer Teilansicht von vorne den Fünflenkerverband der Radaufhängung;
- Fig. 4: in einer weiteren Teilansicht von vorne den unteren Federlenker mit darauf abgestützter Tragfeder sowie darauf abgestützten Schwingungsdämpfer; und
- Fig. 5: die Einzellenker des Fünflenkerverbandes in einem grob schematischen Ersatzmodell.

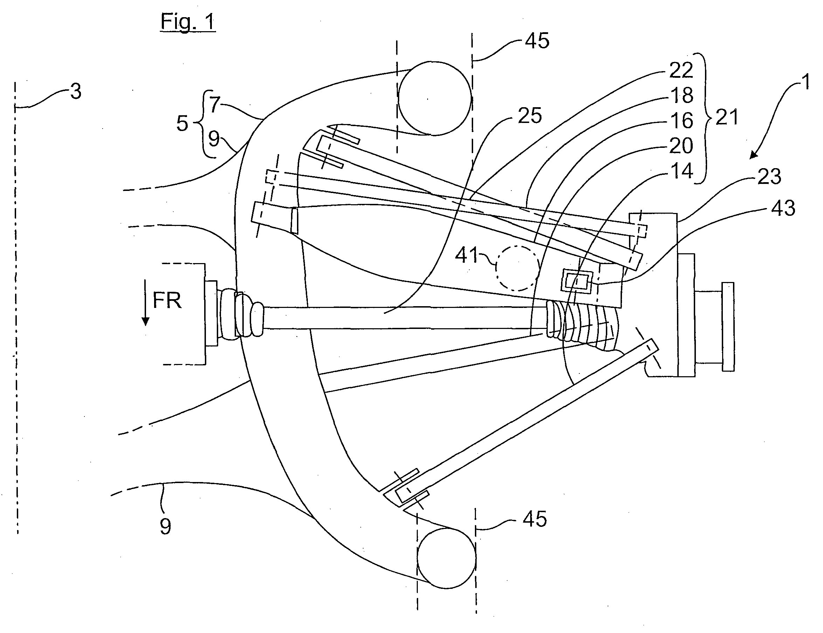

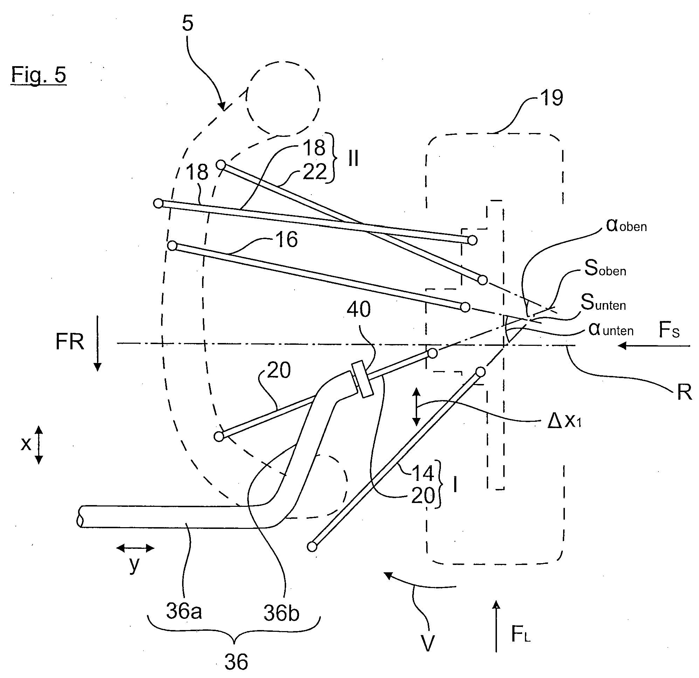

In der Fig. 1 ist in einer Teilansicht von unten eine Hinterachse 1 für ein Kraftfahrzeug dargestellt, die nur in soweit beschrieben ist, als es für das Verständnis der Erfindung erforderlich ist. Die Hinterachse 1 ist mit Bezug auf eine Fahrzeugmittellängsebene 3 spiegelsymmetrisch ausgeführt. Die Hinterachse 1 weist einen Hilfsrahmen 5 auf, der aus Längsträgern 7 sowie aus vorderen und hinteren Querträgern 9 aufgebaut ist. Der Hilfsrahmen 5 ist in an sich bekannter Weise an einem Fahrzeugrohbau angebunden. Am Längsträger 7 des Hilfsrahmens 5 sind untere Lenker 14, 16, 18 sowie obere Lenker 20, 22 in räumlich versetzter Anordnung über nicht näher gezeigte Lenkerlager angelenkt. Die Lenker 14 bis 22 erstrecken sich in der Fahrzeugquerrichtung y nach außen bis zum Radträger 23, der ein, nur in der Fig. 5 angedeutetes Hinterrad 19 des Kraftfahrzeuges trägt. Im vorliegenden Ausführungsbeispiel wird das Hinterrad 19 durch eine Gelenkwelle 25 angetrieben, das in ein nicht dargestelltes, am Hilfsrahmen 5 aufgehängtes Hinterachs-Differenzial geführt ist.

Der Fünflenkerverband 21 der Hinterachse 1 ist gemäß der Fig. 5 in der Fahrtrichtung FR betrachtet in ein vorderes Lenkerpaar I und in ein hinteres Lenkerpaar II unterteilt. Das vordere Lenkerpaar I weist einen, mit Bezug auf die Raddrehachse R unteren vorderen Lenker 14 sowie einen oberen vorderen Lenker 20 auf. Das hintere Lenkerpaar II weist einen unteren hinteren Lenker 18, das heißt die Spurstange, und einen oberen hinteren Lenker 22 auf.

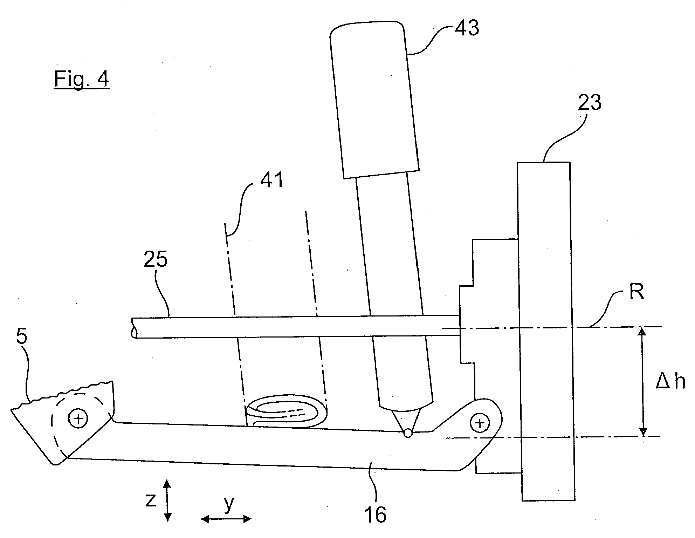

Zwischen den beiden Lenkerpaaren I, II ist in der Fahrtrichtung FR betrachtet ein unterer Federlenker 16 angeordnet. Gemäß der Fig. 4 ist am unteren Federlenker 16 ein Schwingungsdämpfer 43 und eine Tragfeder 41 abgestützt, die eine zwischen dem Fahrzeugaufbau und der Radaufhängung vorgesehene Federanordnung bilden. Die Anbindungspunkte des Schwingungsdämpfers 43 und der Tragfeder 41 am Federlenker 16 sind gemäß der Fig. 4 um einen Höhenversatz Δh von der Hinterrad-Drehachse R vertikal nach unten versetzt. Durch den Höhenversatz Δh der Tragfeder 41 und des Schwingungsdämpfers 43 nach unten wird zusätzlicher Bauraum im Heckbereich des Fahrzeugs gewonnen.

Wie aus den Figuren weiter hervorgeht, sind der obere vordere Lenker 20 und der obere hintere Lenker 22 in der Draufsicht betrachtet in Fahrzeugquerrichtung y nach außen unter Bildung eines Öffnungswinkels α_{oben} (Fig. 5) zueinander keilförmig angeordnet. Gleiches gilt auch für den unteren vorderen Lenker 14 und den Federlenker 16, die in Draufsicht betrachtet in der Fahrzeugquerrichtung y nach außen unter Bildung eines weiteren Öffnungswinkels αᵤₙₜₑₙ (Fig. 5) zueinander keilförmig angeordnet sind. Zudem ist in der Fahrzeuglängsrichtung x betrachtet die Rad-Drehachse R zwischen dem vorderen Lenkerpaar I und dem hinteren Lenkerpaar II angeordnet.

Die beiden keilförmig zueinander angeordneten oberen Lenker 20, 22 ergeben gemäß der Fig. 5 ein oberes Dreieck, während die beiden unteren Lenker 14, 16 ein unteres Dreieck aufspannen. Das obere Dreieck und das untere Dreieck sind in der Draufsicht betrachtet unter Bildung eines Schnittbereiches überlagert. Dabei ist der Federlenker 16 im Wesentlichen vollständig im gemeinsamen Schnittbereich angeordnet.

Der untere Federlenker 16 und der vordere untere Lenker 14 laufen gemäß der Fig. 5 in gedachter Verlängerung nach außen in einen unteren Schnittpunkt Sᵤₙₜₑₙ zusammen, während der obere vordere Lenker 20 und der obere hintere Lenker 22 ebenfalls in gedachter Verlängerung in einem oberen Schnittpunkt S_{oben} zusammenlaufen und den Öffnungswinkel α_{oben} aufspannen. Die beiden Schnittpunkte S_{oben} und Sᵤₙₜₑₙ definieren eine Lenkachse, um die das Hinterrad 19 bei Beaufschlagung von Längs- oder Seitenkräften im Wesentlichen schwenkt. Die Lenkachse ist mit Bezug auf einen nicht dargestellten Radaufstandspunkt (zwischen Hinterrad und der Fahrbahn) in der Fahrzeugquerrichtung y nach außen um einen Querversatz versetzt. Dadurch ergibt sich bei Ausübung einer Längskraft F_{L} (Fig. 5) auf das Hinterrad 19 (das heißt beim Bremsvorgang oder im Rekuperationsbetrieb) eine in der Fig. 5 mit Pfeil angedeutete vorteilhafte Vorspuränderung V des Hinterrads 19.

Das mit Bezug auf den Federlenker 16 vordere Lenkerpaar I ist dabei in der Fahrzeugquerrichtung y weicher als das hintere Lenkerpaar II ausgebildet. Das im Vergleich zum hinteren Lenkerpaar II querweichere vordere Lenkerpaar I begünstigt bei Ausübung einer Seitenkraft F_{S} eine Vorspuränderung V am Hinterrad 19, wie es in der Fig. 5 angedeutet ist.

Zudem ist im vorderen Lenkerpaar I der obere vordere Lenker 20 gegenüber dem unteren vorderen Lenker 14 um einen Längsversatz Δx₁ (Fig. 5) in der Fahrzeuglängsrichtung x zurückgesetzt. Im hinteren Lenkerpaar II sind dagegen der hintere obere Lenker 22 und der hintere untere Lenker 18 in der Draufsicht betrachtet einander überkreuzt angeordnet.

Wie aus der Fig. 5 weiter hervorgeht, ist in der Fahrtrichtung FR vor der Raddrehachse R sowie in etwa auf Höhe des unteren Lenkers 14 ein U-förmiger Querstabilisator 36 angeordnet, dessen in der Fahrzeugquerrichtung y verlaufendes Mittelteil 36a über Stabilisatorlager am Hilfsrahmen 5 verdrehbar gelagert ist.

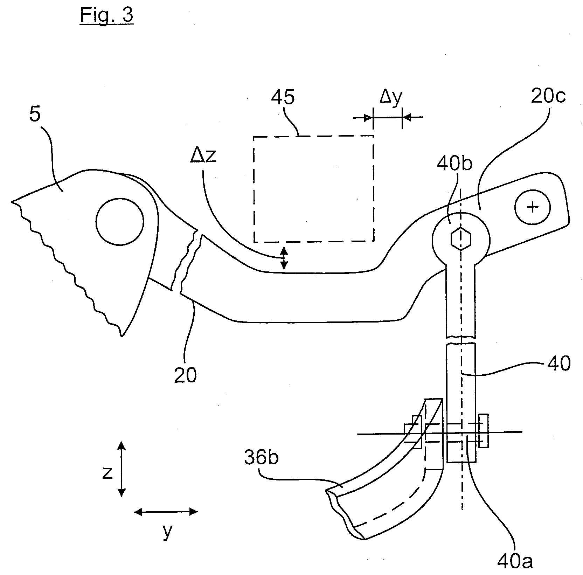

Die entgegen der Fahrtrichtung FR nach hinten und schräg nach außen abragenden Schenkel 36b des Stabilisators 36 sind an ihren freien Enden über jeweils eine nach oben abragende Stange 40 (Fig. 3 und 5) gelenkig mit dem oberen, vorderen Lenker 20 der Radaufhängung verbunden. Die Gelenkverbindung 40a, 40b (Fig. 3) der Stange 40 mit den Schenkeln 36b des Stabilisators 36 und mit dem Lenker 20 sind durch Gummi-Metall-Hülsenlager hergestellt.

In der Fig. 3 ist die Radaufhängung in einem eingefederten Zustand des Kraftfahrzeuges gezeigt. Demzufolge ist die Gelenkverbindung 40b zwischen der Stange 40 und dem vorderen oberen Lenker 20 in der Fahrzeugquerrichtung y um einen Quer-Freigang Δy außerhalb des Fahrzeug-Längsträgers 45 angeordnet. Der sich unterhalb des Fahrzeug-Längsträgers 45 erstreckende Lenker 20 ist zudem in etwa V-förmig nach unten gekrümmt und um einen Vertikal-Freigang Δz vom Fahrzeug-Längsträger 45 beabstandet.

## Patentansprüche

1. Radaufhängung für ein Hinterrad eines zweispurigen Kraftfahrzeugs, mit einem Fünflenkerverband, der fünf Einzellenker (14, 16, 18, 20, 22) aufweist, die über aufbauseitige Lager am Fahrzeugaufbau (5) und über radträgerseitige Lager am Radträger (23) des Hinterrads angelenkt sind, welcher Fünflenkerverband in der Fahrtrichtung (FR) betrachtet ein vorderes Lenkerpaar (I) und ein hinteres Lenkerpaar (II) aufweist, wobei das vordere Lenkerpaar (I) einen mit Bezug auf die Raddrehachse unteren vorderen Lenker (14) und einen oberen vorderen Lenker (20) aufweist, und das hintere Lenkerpaar (II) einen unteren hinteren Lenker (18) und einen oberen hinteren Lenker (22) aufweist, wobei in der Fahrtrichtung (FR) zwischen dem vorderen und hinteren Lenkerpaar (I, II) ein unterer Federlenker (16) angeordnet ist, auf dem eine, einen Schwingungsdämpfer und eine Tragfeder aufweisende Federanordnung abgestützt ist, wobei das mit Bezug auf den Federlenker (16) vordere Lenkerpaar (I) in der Fahrzeugquerrichtung (y) derart weicher als das hintere Lenkerpaar (II) ausgebildet ist, dass unter Ausübung einer Seitenkraft (F_{S}) oder einer Längskraft (F_{L}) eine Vorspuränderung (V) am Hinterrad (19) erfolgt, und wobei vom vorderen Lenkerpaar (I) der obere vordere Lenker (20) gegenüber dem unteren vorderen Lenker (14) um einen Längsversatz (Δx₁) in der Fahrzeuglängsrichtung (x) zurückgesetzt ist und ein Querstabilisator (36) am oberen vorderen Lenker (20) angreift.

2. Radaufhängung nach Anspruch 1, **dadurch gekennzeichnet, dass** der obere vordere Lenker (20) des vorderen Lenkerpaars (I) und der obere hintere Lenker (22) des hinteren Lenkerpaars (II) in der Draufsicht betrachtet in der Fahrzeugquerrichtung (y) nach außen unter Bildung eines Öffnungswinkels (α_{oben}) zueinander keilförmig angeordnet sind.

3. Radaufhängung nach Anspruch 1 oder 2, **dadurch gekennzeichnet, dass** der untere vordere Lenker (14) und der Federlenker (16) in der Draufsicht betrachtet in der Fahrzeugquerrichtung (y) nach außen unter Bildung eines Öffnungswinkels (αᵤₙₜₑₙ) zueinander keilförmig angeordnet sind.

4. Radaufhängung nach Anspruch 1, 2 oder 3, **dadurch gekennzeichnet, dass** in der Fahrzeuglängsrichtung (x) betrachtet die Rad-Drehachse (R) zwischen dem vorderen Lenkerpaar (I) und dem hinteren Lenkerpaar (II) angeordnet ist.

5. Radaufhängung nach einem der Ansprüche 1 bis 4, **dadurch gekennzeichnet, dass** die Tragfeder (41) und der Schwingungsdämpfer (43) gemeinsam in einem, am Federlenker (16) abgestützten Federbein integriert oder voneinander separat auf dem Federlenker (16) abgestützt sind.

6. Radaufhängung nach einem der vorhergehende Ansprüche, **dadurch gekennzeichnet, dass** die beiden oberen Lenker (20, 22) ein oberes Dreieck und die beiden unteren Lenker (14, 18) ein unteres Dreieck aufspannen, und dass das obere und untere Dreieck in der Draufsicht betrachtet unter Bildung eines Schnittbereiches überlagert sind, und dass der Federlenker (16) zumindest teilweise im Schnittbereich angeordnet ist.

7. Radaufhängung nach einem der vorhergehenden Ansprüche, **dadurch gekennzeichnet, dass** der Querstabilisator (36) ein, in der Fahrzeugquerrichtung (y) ausgerichtetes, drehbar gelagertes Mittelteil (36a), und zumindest einen, in der Fahrzeuglängsrichtung (x) vom Mittelteil (36a) abragenden Abtriebsschenkel (36b) aufweist, der direkt oder indirekt über ein in etwa vertikal verlaufende Stange (40) mit dem oberen vorderen der Lenker (20) gelenkig verbunden ist.

8. Radaufhängung nach einem der vorhergehenden Ansprüche, **dadurch gekennzeichnet, dass** vom hinteren Lenkerpaar (II) der hintere obere Lenker (22) und der hintere untere Lenker (18) in der Draufsicht betrachtet einander überkreuzen.

9. Radaufhängung nach einem der vorhergehenden Ansprüche, **dadurch gekennzeichnet, dass** der die Spurstange bildende hintere untere Lenker (18) mit seinem radträgerseitigen Anlenkpunkt, in der Fahrtrichtung (FR) betrachtet, hinter dem hinteren oberen Lenker (22) angeordnet ist.

10. Radaufhängung nach einem der vorhergehenden Ansprüche, **dadurch gekennzeichnet, dass** der untere Federlenker (16) und der untere vordere Lenker (14) in gedachter Verlängerung zu einem ersten Schnittpunkt (Sᵤ) zusammenlaufen, dass die oberen Lenker (20, 22) in gedachter Verlängerung zu einem zweiten Schnittpunkt (Sₒ) zusammenlaufen, und dass der radträgerseitige Anbindungspunkt des die Spurstange bildenden hinteren unteren Lenkers (18), in der Fahrtrichtung (FR) betrachtet, hinter diesen Schnittpunkten angeordnet ist.

## Claims

1. A wheel suspension for a rear wheel of a two-track motor vehicle, comprising a five-link assembly which has five individual links (14, 16, 18, 20, 22) which are coupled to the vehicle body (5) via body-side bearings and to the wheel carrier (23) of the rear wheel via wheel-carrier-side bearings, which five-link assembly, as viewed in the direction of travel (FR), has a front pair of links (I) and a rear pair of links (II), wherein the front pair of links (I) has a lower front link (14), with respect to the axis of rotation of the wheel, and an upper front link (20), and the rear pair of links (II) has a lower rear link (18) and an upper rear link (22), wherein a lower spring link (16), on which a spring arrangement having a vibration damper and a supporting spring is supported, is arranged in the direction of travel (FR) between the front and rear pairs of links (I, II), wherein the front pair of links (I) with respect to the spring link (16) is of softer design in the transverse direction (y) of the vehicle than the rear pair of links (II), so that a change in the toe-in (V) at the rear wheel (19) takes place under exertion of a lateral force (F_{S}) or a longitudinal force (F_{L}), and wherein from the front pair of links (I) the upper front link (20) is set back with respect to the lower front link (14) by a longitudinal offset (Δx₁) in the longitudinal direction (x) of the vehicle and a transverse stabiliser (36) engages on the upper front link (20).

2. Wheel suspension according to claim 1, **characterised in that** the upper front link (20) of the front pair of links (I) and the upper rear link (22) of the rear pair of links (II), as viewed from above, are arranged in the transverse direction (y) of the vehicle outwards forming a wedge-shaped opening angle (α_{oben}) to one another.

3. Wheel suspension according to claim 1 or 2, **characterised in that** the lower front link (14) and the spring link (16), as viewed from above, are arranged in the transverse direction (y) of the vehicle outwards forming a wedge-shaped opening angle (αᵤₙₜₑₙ) to one another.

4. Wheel suspension according to claim 1, 2 or 3, **characterised in that**, as viewed in the longitudinal direction (x) of the vehicle, the wheel axis of rotation (R) is arranged between the front pair of links (I) and the rear pair of links (II).

5. Wheel suspension according to one of claims 1 to 4, **characterised in that** the supporting spring (41) and the vibration damper (43) are integrated together in a spring leg supported on the spring link (16) or are supported separated from one another on the spring link (16).

6. Wheel suspension, according to one of the preceding claims, **characterised in that** both upper links (20, 22) span an upper triangle and both lower links (14, 18) span a lower triangle, and **in that** the upper and lower triangles, as viewed from above, are superimposed forming an intersection region, and **in that** the spring link (16) is arranged at least partially in the intersection region.

7. Wheel suspension according to one of the preceding claims, **characterised in that** the transverse stabiliser (36) has a rotatably mounted centre part (36a) orientated in the transverse direction (y) of the vehicle, and at least one output leg (36b) projecting from the centre part (36a) in the longitudinal direction (x) of the vehicle, which is directly or indirectly connected, in an articulated manner, to the upper front link (20) via an approximately vertically aligned rod (40).

8. Wheel suspension according to one of the preceding claims, **characterised in that** from the rear pair of links (II), the upper rear link (22) and the lower rear link (18) cross each other, as viewed from above.

9. Wheel suspension according to one of the preceding claims, **characterised in that** the track-rod-forming lower rear link (18) with the wheel-carrier-side attachment point thereof, as viewed in the direction of travel (FR), is arranged behind the upper rear link (22).

10. Wheel suspension according to one of the preceding claims, **characterised in that** the lower spring link (16) and the lower front link (14) run together in an imaginary extension to a first intersection point (Sᵤ), **in that** the upper links (20, 22) run together in an imaginary extension to a second intersection point (Sₒ), and **in that** the wheel-carrier-side attachment point of the track-rod-forming rear lower link (18), as viewed in the direction of travel (FR), is arranged behind said intersection points.

## Revendications

1. Suspension de roue pour une roue arrière d'un véhicule automobile à deux voies, comprenant un assemblage à cinq bras, qui présente cinq bras individuels (14, 16, 18, 20, 22), qui sont articulés par l'intermédiaire de paliers côté carrosserie au niveau de la carrosserie de véhicule (5) et par l'intermédiaire de paliers côté support de roue au niveau du support de roue (23) de la roue arrière, lequel assemblage à cinq bras présente, vu dans la direction de déplacement (FR), une paire de bras avant (I) et une paire de bras arrière (II), dans laquelle la paire de bras avant (I) présente un bras avant inférieur (14) par rapport à l'axe de rotation de roue et un bras avant supérieur (20) et la paire de bras arrière (II) présente un bras arrière inférieur (18) et un bras arrière supérieur (22), dans laquelle un bras de ressort (16) inférieur est disposé dans la direction de déplacement (FR) entre la paire de bras avant et la paire de bras arrière (I, II), sur lequel prend appui un ensemble de ressorts présentant un amortisseur de vibrations et un ressort de support, dans laquelle la paire de bras avant (I) par rapport au bras de ressort (16) est réalisée dans la direction transversale de véhicule (y) de manière plus souple que la paire de bras arrière (II) de telle manière que se produit sous l'effet d'une force latérale (F_{S}) ou d'une force longitudinale (F_{L}) une modification de pincement (V) au niveau de la roue arrière (19), et dans laquelle, de la paire de bras avant (I), le bras avant supérieur (20) est en retrait par rapport au bras avant inférieur (14) d'un décalage en longueur (Δx₁) dans la direction longitudinale de véhicule (x) et un stabilisateur transversal (36) s'engage au niveau du bras avant supérieur (20).

2. Suspension de roue selon la revendication 1, **caractérisée en ce que** le bras avant supérieur (20) de la paire de bras avant (I) et le bras arrière supérieur (22) de la paire de bras arrière (II) sont disposés, vus en hauteur, de manière à former un coin l'un par rapport à l'autre en formant un angle d'ouverture (α_{oben}) vers l'extérieur dans la direction transversale de véhicule (y).

3. Suspension de roue selon la revendication 1 ou 2, **caractérisée en ce que** le bras avant inférieur (14) et le bras de ressort (16) sont disposés, vus en hauteur, de manière à former un coin l'un par à l'autre en formant un angle d'ouverture (αᵤₙₜₑₙ) vers l'extérieur dans la direction transversale de véhicule (y).

4. Suspension de roue selon la revendication 1, 2 ou 3, **caractérisée en ce que** vu dans la direction longitudinale de véhicule (x), l'axe de rotation de roue (R) est disposé entre la paire de bras avant (I) et la paire de bras arrière (II).

5. Suspension de roue selon l'une quelconque des revendications 1 à 4, **caractérisée en ce que** le ressort de support (41) et l'amortisseur de vibrations (43) sont intégrés ensemble dans une jambe de force prenant appui au niveau du bras de ressort (16) ou prennent appui de manière séparée l'un de l'autre sur le bras de ressort (16).

6. Suspension de roue selon l'une quelconque des revendications précédentes, **caractérisée en ce que** les deux bras supérieurs (20, 22) couvrent un triangle supérieur et les deux bras inférieurs (14, 18) couvrent un triangle inférieur, et **en ce que** le triangle supérieur et le triangle inférieur sont, vus en hauteur, superposés en formant une zone d'intersection, et **en ce que** le bras de ressort (16) est disposé au moins en partie dans la zone d'intersection.

7. Suspension de roue selon l'une quelconque des revendications précédentes, **caractérisée en ce que** le stabilisateur transversal (36) présente une partie centrale (36a) montée de manière à pouvoir tourner, orientée dans la direction transversale de véhicule (y) et au moins une branche de sortie (36b) dépassant de la partie centrale (36a) dans la direction longitudinale de véhicule (x), laquelle branche de sortie est reliée de manière articulée directement ou indirectement par l'intermédiaire d'une barre (40) s'étendant approximativement de manière verticale, au bras avant supérieur (20).

8. Suspension de roue selon l'une quelconque des revendications précédentes, **caractérisée en ce que** de la paire de bras arrière (II), le bras supérieur arrière (22) et le bras inférieur arrière (18) se croisent l'un l'autre vus en hauteur.

9. Suspension de roue selon l'une quelconque des revendications précédentes, **caractérisée en ce que** le bras arrière inférieur (18) formant la barre d'accouplement est disposé par son point d'articulation situé côté support de roue, vu dans la direction de déplacement (FR), derrière le bras supérieur arrière (22).

10. Suspension de roue selon l'une quelconque des revendications précédentes, **caractérisée en ce que** le bras de ressort (16) inférieur et le bras avant inférieur (14) se rejoignent, dans un prolongement imaginaire, pour former un premier point d'intersection (Sᵤ), **en ce que** les bras supérieurs (20, 22) se rejoignent, dans un prolongement imaginaire, pour former un deuxième point d'intersection (Sₒ), et **en ce que** le point de rattachement situé côté support de roue du bras inférieur arrière (18) formant la barre d'accouplement est disposé, vu dans la direction de déplacement (FR), derrière lesdits points d'intersection.
